(19) Europäisches Patentamt
European Patent Office
Office européen des brevets

(11) **EP 3 095 888 B1**

(12) **EUROPEAN PATENT SPECIFICATION**

(45) Date of publication and mention of the grant of the patent:
**14.08.2019 Bulletin 2019/33**

(51) Int Cl.:
*C22C 38/28* *(2006.01)*    *C22C 38/60* *(2006.01)*
*C23C 8/14* *(2006.01)*    *C23C 8/18* *(2006.01)*
*C21D 9/46* *(2006.01)*    *H01M 8/12* *(2016.01)*
*C23C 8/10* *(2006.01)*    *C22C 38/04* *(2006.01)*
*H01M 8/02* *(2016.01)*    *C22C 38/02* *(2006.01)*
*C22C 38/06* *(2006.01)*    *H01M 8/124* *(2016.01)*
*C22C 38/20* *(2006.01)*    *C22C 38/22* *(2006.01)*
*C22C 38/24* *(2006.01)*    *C21D 8/04* *(2006.01)*
*C22C 38/26* *(2006.01)*    *C22C 38/30* *(2006.01)*

(21) Application number: **15737113.9**

(22) Date of filing: **14.01.2015**

(86) International application number:
**PCT/JP2015/050815**

(87) International publication number:
**WO 2015/108072 (23.07.2015 Gazette 2015/29)**

(54) **FERRITIC STAINLESS STEEL SHEET EXCELLENT IN ELECTRICAL CONDUCTIVITY AND ADHESION OF OXIDE FILM**

FERRITISCHES EDELSTAHLBLECH MIT HERVORRAGENDER ELEKTRISCHER LEITFÄHIGKEIT UND HAFTUNG EINES OXIDFILMS

TÔLE D'ACIER INOXYDABLE FERRITIQUE PRÉSENTANT D'EXCELLENTES CONDUCTIVITÉ ÉLECTRIQUE ET ADHÉRENCE D'UN FILM D'OXYDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.01.2014 JP 2014004290**

(43) Date of publication of application:
**23.11.2016 Bulletin 2016/47**

(73) Proprietor: **Nippon Steel & Sumikin Stainless Steel Corporation**
**Chiyoda-ku**
**Tokyo 100-0004 (JP)**

(72) Inventors:
• **HATANO, Masaharu**
**Tokyo 100-0004 (JP)**
• **IKEGAMI, Osamu**
**Tokyo 100-0004 (JP)**
• **FUKAYA, Masuhiro**
**Tokyo 100-0004 (JP)**

(74) Representative: **Vossius & Partner**
**Patentanwälte Rechtsanwälte mbB**
**Siebertstrasse 3**
**81675 München (DE)**

(56) References cited:
**EP-A1- 2 460 900**    **EP-A1- 2 871 251**
**EP-A2- 1 298 228**    **JP-A- H07 292 446**
**JP-A- 2006 318 652**    **JP-A- 2013 204 128**
**JP-A- 2013 204 128**    **JP-A- 2014 031 572**
**JP-A- 2014 173 124**    **US-A- 5 512 239**
**US-A1- 2011 176 953**    **US-A1- 2013 004 360**

**Description**

[Technical Field]

The present invention relates to ferritic stainless steel sheet formed with an oxide film having excellent electrical conductivity at a high temperature and provided with excellent film adhesion even with long term use. In particular, it is suitable for a separator of a solid oxide type fuel cell and high temperature members around it.

[Background Art]

Recently, due to the depletion of petroleum and other fossil fuels, the phenomenon of global warming due to $CO_2$ emissions, and other issues, commercial application of new systems of power generation taking the place of conventional systems has been sought. As one of these, attention is being focused on "fuel cells" with their high practical value as dispersed electric power sources for generating drive power for automobiles. There are several types of fuel cells, but among them, solid oxide fuel cells (SOFC) are high in energy efficiency and considered promising in terms of future use.

The operating temperature of solid oxide fuel cells been lowered in recent years. Due to improvements in the solid electrolyte membranes, SOFC systems operating at 600 to 900°C have been becoming the mainstream. If in such a temperature region, application of metal materials with their inexpensive cost and good workability has been studied to take the place of ceramics with their expensive cost and poor workability.

The properties sought from a metal material are, first, an excellent "oxidation resistance" in the 600 to 900°C temperature region, next, a "heat expansion coefficient" equal to a ceramic-based solid oxide and, in addition to these basic properties, a good "electrical conductivity" in the state bonded to a ceramic-based solid oxide due to its high power generating efficiency at a high temperature. However, from the viewpoint of the increase in popularity, application of material materials which are inexpensive, are kept down in peeling of the oxide film and not impaired in electrical conductivity in high temperature, long term use, and therefore are excellent in durability has become an issue. Note that, the "oxide film" means the oxide film which is formed on the surfaces of metal materials in the operating temperature region of an SOFC system (600 to 900°C). Therefore, this "oxide film" differs from an oxide film formed at ordinary temperature at the surface of stainless steel. Below, in the Present Description, unless clearly indicated otherwise in particular, an "oxide film" means an oxide film formed at the region of the operating temperature of an SOFC system.

As a metal material excellent in oxidation resistance at a high temperature, for example, there are SUS309S and SUS310S prescribed in JIS G 4305. However, these high Cr, high Ni type austenitic stainless steels are large in heat expansion coefficient, so in a situation of starts and stops where heat expansion and heat contraction are repeated, heat deformation and peeling of scale occur and therefore use is not possible. On the other hand, the heat expansion coefficient of ferritic stainless steel is of the same extent as a ceramic-based solid oxide, so if satisfying both the requirements of oxidation resistance and electrical conductivity, this steel becomes the optimum candidate material.

In the past, PLTs 1 to 3 have disclosed the above-mentioned ferritic stainless steels provided with both oxidation resistance and electrical conductivity. PLTs 1 to 3 disclose high Cr types of ferritic stainless steels characterized by including one or more types of elements selected from the group of Y, REM (rare earth elements), and Zr. The inventions described in these references are based on the technical idea of forming Cr-based oxide films and adding Y, REM, or Zr to improve the Cr-based oxide films in oxidation resistance and electrical conductivity.

On the other hand, ferritic stainless steel giving electrical conductivity without impairing the oxidation resistance without relying on the addition of rare earth elements is disclosed. What is described in PLT 4 is the technical idea of forming a Cr-based oxide film on the steel surface and raising the electrical conductivity without impairing the oxidation resistance by addition of the high electrical conductivity Cu rather than relying on Y, REM, Zr, and other rare earth elements. PLT 5 improves the electrical conductivity of the film by making the film structure one mainly comprised of an Al-based oxide film in which Ti or Nb are copresent.

As explained above, in the past, as the metal material for use for a separator of an SOFC, a high Cr type of ferritic stainless steel improved in oxidation resistance and electrical conductivity by formation of a Cr-based oxide film and (1) addition of the very expensive rare earth elements (Y, REM, and Zr) and (2) addition of the electrically conductive Cu or modification to an Al-based oxide film in which Ti or Nb is copresent has been known. The former stainless steel has a major problem in reduction in costs from the viewpoint of increase of use. The latter stainless steel has a problem in growth of an oxide film in long time use at a high temperature and a drop in electrical conductivity along with that. That is, at the present time, no ferritic stainless steel excellent in electrical conductivity and adhesion of the oxide film in long term use without relying on the addition of rare earths, that is, rare earth elements, and able to be mass produced industrially inexpensively has yet appeared.

EP 1298228 A2 discloses a steel for separators of solid-oxide type fuel cells.

[Citation List]

[Patent Literature]

PLT 1. Japanese Patent Publication No. 2003-173795A
PLT 2. Japanese Patent Publication No. 2005-320625A
PLT 3. Japanese Patent Publication No. 2006-57153A
PLT 4. Japanese Patent Publication No. 2006-9056A
PLT 5. Japanese Patent Publication No. 2012-67391A

[Summary of the Invention]

[Technical Problem]

The present invention is based on the technical idea of realizing steel having an electrical conductivity and adhesion of the oxide film no different from ferritic stainless steel containing rare earth elements disclosed in the past by ferritic stainless steel able to be inexpensively mass produced. That is, the present invention provides ferritic stainless steel sheet for SOFC separator use not impaired in electrical conductivity and adhesion of the oxide film and excellent in durability without relying on the addition of rare earth elements - which had been becoming an issue in the prior art.

[Solution to Problem]

The present invention is described in the claims.

[Effect of the Invention]

According to the present invention, it is possible to provide ferritic stainless steel sheet for SOFC separator use not impaired in electrical conductivity and adhesion of the oxide film and excellent in durability without relying on the addition of rare earth elements - which had been becoming an issue in the prior art.

[Brief Description of the Drawings]

FIG. 1 is a graph showing the relationship between [Mn]/([Si]+[Al]) and the contact resistivity at 750°C.
FIG. 2 is a graph showing the relationship between [Mn]/([Si]+[Al]) and the peeling rate at 750°C.

[Description of Embodiments]

The inventors etc. engaged in intensive experiments and studies on the correlation of the amounts of Mn, Si, and Al with the oxidation resistance and electrical conductivity in high Cr ferritic stainless steel sheet envisioning the high temperature, long-term use of an SOFC so as to solve the above problem and thereby completed the present invention. Below, the discoveries obtained in the present invention will be explained.

The electrical conductivity and adhesion of an oxide film are remarkably improved by extreme reduction of Si and Al and addition of 0.3% or more of Mn. If envisioning the 600 to 900°C of the operating temperature region of an SOFC, the oxide film should be mainly comprised of $Cr_2O_3$ and have $M_3O_4$ type oxides (M=Mn, Cr) in addition to $Cr_2O_3$. In general, it is known that oxides of Si and Al remarkably raise the electrical resistance. By simultaneously suppressing the formation of oxides of Si and Al and concentration of these at the steel interface, it is possible to improve the electrical conductivity. Furthermore, it was learned that by establishing the copresence of an $M_3O_4$ type oxide in a $Cr_2O_3$ oxide film, a behavior is exhibited by which the electrical conductivity can be made higher. The mechanism relating to the improvement of the electrical conductivity due to such modification of the oxide film is still unclear on many points, but (a) the formation of $M_3O_4$ type oxides introduces vacancy defects into the $Cr_2O_3$ oxide film which enable the electrical conductivity, and (b) compared with $Cr_2O_3$, the high electrical conductivity $M_3O_4$ type oxides impart a good conductor action (donor action) to a semiconductor, so it is considered that the improvement may be a result of the action and effect of (a) and (b). Further, it was confirmed that by adding a trace amount of Ti, the effect is multiplied.

Further, the oxide film suppresses peeling at the interface of the oxide film and base iron and had a good adhesion. For improvement of the adhesion of the oxide film, in addition to suppression of internal oxidation by the reduction of Si and Al, formation of an Mn oxide film (MnO) at the interface of the oxide film and base iron may also be help.

As explained above, the novel discovery was obtained that by reducing the Si and Al while adding the necessary amount of Mn, it is possible to rather improve the adhesion of the oxide film without impairing the soundness of the $Cr_2O_3$ oxide film (oxidation resistance) and to impart electrical conductivity without relying on the addition of rare earth elements. The present inventions of the above (1) to (3) were completed based on the above-mentioned results of study.

Below, the requirements of the present invention will be explained in detail. Note that, the indications "%" of the contents of the elements mean "mass%".

The reasons for limitation of the components will be explained below.

C is an unavoidable impurity element included in steel and impairs the soundness of the $Cr_2O_3$ oxide film targeted by the present invention. For this reason, the lower the amount of C, the more preferable. The upper limit is made 0.02%, while excessive reduction invites a large rise in the refining costs. From the viewpoint of the oxidation resistance and manufacturing ability, the preferable range is 0.001 to 0.01%.

Si is a general deoxidizing element, but impairs the electrical conductivity and adhesion of the oxide film targeted by the present invention. For this reason, the lower the amount of Si the more preferable. The upper limit is made 0.15%, while excessive reduction invites an increase in the refining costs. From the viewpoint of achieving both the targeted properties and manufacturing ability of the present invention, the preferable range is made 0.01 to 0.12%. The more preferable range is 0.01 to 0.1%.

Mn effectively acts as a deoxidizing element plus, as explained above, acts to improve the electrical conductivity and adhesion of the oxide film targeted by the present invention. In the present invention, the effect is exhibited at 0.3% or more. Therefore, the lower limit is made 0.3%. Excessive addition impairs the soundness of the $Cr_2O_3$ oxide film and invites a drop in the oxidation resistance and electrical conductivity. For this reason, the upper limit is made 1%. From the viewpoint of efficiently obtaining the targeted properties of the present invention, the preferable range is 0.3 to 0.8%.

P is an unavoidable impurity element included in steel and invites a drop in the target oxidation resistance of the present invention. For this reason, the upper limit is made 0.04%. However, excessive reduction invites a rise in the refining costs. Therefore, the lower limit is made 0.01%. From the viewpoint of the oxidation resistance and the manufacturing ability, the preferable range is 0.02 to 0.03%.

S is an unavoidable impurity element included in steel and lowers the target oxidation resistance of the present invention. In particular, the presence of Mn-based inclusions or solid solution S acts as a starting point of breakage of the $Cr_2O_3$ oxide film in long term use at a high temperature. For this reason, the lower the amount of S the more preferable. The upper limit is made 0.003%, while excessive reduction invites a rise in the material and refining costs. From the viewpoint of the oxidation resistance and hot workability or manufacturing costs, the preferable range is 0.0002 to 0.001%.

Cr is a basic component element in securing the targeted oxidation resistance of the present invention and the requirement of a metal separator, that is, the good heat expansion coefficient. In the present invention, if less than 20%, the targeted basic properties are not sufficiently secured. Therefore, the lower limit is made 20%. However, excessive addition causes a remarkable drop in the toughness and ductility of a hot rolled steel material and impairs the manufacturing ability. From the viewpoint of the targeted suppression of alloy costs of the present invention as well, the upper limit is made 25%. From the viewpoint of the basic properties and the manufacturing ability and cost, the preferable range is 21 to 23%.

Mo is a constituent element effective in securing the heat expansion coefficient of the requirement of the metal separator of the present invention. Further, it also acts as a solution strengthening element and acts effectively in securing the high temperature strength required as a high temperature member. To obtain these effects, the lower limit is made 0.5%. Excessive addition causes a rise of the material costs and obstructs the manufacturing ability. Therefore, the upper limit is 2%. From the viewpoint of the cost-effect ratio, the preferable range is 0.8 to 1.5%.

Al is a powerful deoxidizing element, but has the action of obstructing the targeted electrical conductivity and adhesion of the present invention. For this reason, the lower the amount of Al the more preferable. To reduce the amount of Si, a necessary amount as a deoxidizing element is added. To obtain the deoxidizing effect, the lower limit is set to 0.01%. The upper limit is made 0.1% so as to secure the targeted properties of the oxide film of the present invention. From the viewpoint of the targeted properties and manufacturing ability of the present invention, the preferable range is 0.02 to 0.06%.

N is an unavoidable impurity elements contained in steel and obstructs the targeted soundness of the $Cr_2O_3$ oxide film of the present invention. For this reason, the lower the amount of N the more preferable, but excessive reduction invites a great rise in the refining costs. Therefore, the upper limit is made 0.02%. From the viewpoint of the oxidation resistance and the manufacturing ability, the preferable range is 0.001 to 0.01%.

Ti is added since it has the action of fixing C and N as carbonitrides and raising the oxidation resistance targeted by the present invention and raising the electrical conductivity. In the past, high electrical conductivity Ti, by inclusion in the oxide film, raised the targeted electrical conductivity of the present invention to contribute to reduction of the contact resistance. To obtain these effects, the lower limit is made 0.001%. Excessive addition obstructs the rise in material costs and the workability, so the upper limit is 0.5%. From the viewpoint of the cost-effect ratio, the preferable range is 0.05 to 0.35%.

The ferritic stainless steel sheet of the present invention has to have the above components and has to have the prescribed relationship of the amount of Mn and the amount of: (Si+Al) from the viewpoints of the targeted electrical-conductivity and adhesion of the oxide film. In a mainly $Cr_2O_3$ oxide film suppressing the internal oxidation of Si or Al, to concentrate the Mn and form an $M_3O_4$ type oxide (M=Mn, Cr) so as to obtain electrical conductivity, it is necessary to make the ratio of Mn to the total amount of the amount of Si and the amount of Al one where [Mn]/([Si]+[Al])>2.5. On the other hand, when excessively promoting the formation of [Mn]/([Si]+[Al])≥8.0, $M_3O_4$ type oxides, the protective ability of the mainly $Cr_2O_3$ oxide film is obstructed and growth of the oxide film causes a drop in the electrical conductivity and adhesion. Therefore, to obtain the targeted property, 2.5<[Mn]/([Si]+[Al])<8.0 is set. From the viewpoint of easing excessive reduction of Si and Al and obtaining the target properties, the preferable range is made 2.6≤[Mn]/([Si]+[Al])≤7.3, the more preferable range is made 3.0≤[Mn]/([Si]+[Al])≤7.0, and the still more preferable range is made 4.0≤[Mn]/([Si]+[Al])≤7.0. Further, the particularly preferable range is made 4.4≤[Mn]/([Si]+[Al])≤6.0. In the formula, [Mn], [Si], [Al] mean the contents (mass%) of the respective elements.

The following elements can be selectively added.

Nb and V, in the same way as Ti, can be selectively added since it has the action of fixing the C and N as carbonitrides to improve the target oxidation resistance of the present invention and raise the required strength of the high temperature members. To obtain these effects, when added, the lower limit is made 0.001%. Excessive addition causes a rise in the material costs and obstructs the workability. When added, the upper limit is 0.5%. The preferable upper limit is 0.45%, more preferably it is 0.4%. From the viewpoint of the cost-effect ratio, when added, the preferable range is 0.05 to 0.35%. The more preferable range is 0.05 to 0.2%.

Ni can be selectively added since it acts as a solution strengthening element and contributes to the rise of the high temperature strength required as a structural material. To obtain these effects, if added, the lower limit is made 0.1%. Excessive addition causes a rise in the material cost and impairs the workability. If added, the upper limit is 2%. From the viewpoint of the cost-effect ratio, if added, the preferable range is 0.2 to 0.8%.

B, Mg, Ca, and Ga have the action of improving the hot workability. B, Ga and Ca can be selectively added. To obtain these effects, in the case of addition, the lower limit is made 0.0002%. However, excessive addition induces a drop in the manufacturing ability and surface defects in hot working. If added, the upper limit is made 0.005%. The preferable range is 0.0003 to 0.002% from the viewpoint of the manufacturing ability and effect.

Cu, Sn, and Sb, like Ni, have the effect of raising the high temperature strength and improving the corrosion resistance, but excessive addition has the action of impairing the adhesion and manufacturing ability of the oxide film due to precipitation or segregation. If adding Cu and Sn, the upper limit is made 1.0%, preferably 0.5% or less. If adding Sb, the upper limit is made 0.5%, preferably 0.2% or less. If added, the lower limits are made Cu: 0.1%, Sn: 0.01%, and Sb: 0.005%.

W and Co, in addition to solution strengthening like Ni, concentrate at the oxide film and right below it so have the effect of raising the electrical conductivity, but are expensive elements. In the present invention, these may be selectively added to obtain that effect. The upper limits in the case of adding these are 1%, preferably 0.5% or less. If added, the lower limits are made 0.1%.

Zr, La, Y, and REM have had remarkable effects in improving the electrical conductivity and soundness of oxide films since the past, but are very expensive elements. The present invention has as its target obtaining the properties without relying on the addition of these elements. However, they may also be selectively added to further bring out its effects. If added, the lower limit is made 0.001%, while the upper limit is made 0.1%. If added, the preferable range is 0.01 to 0.05% from the viewpoint of the cost-effect ratio. Note that, in the Description, "REM" indicates the elements of Ce, Pr, Nd, Pm, Sm, Eu, Gd, Tb, Dy, Ho, Er, Tm, Yb, and Lu. If one or more types of these elements is included, an REM is included.

The ferritic stainless steel sheet of the present invention has the above component and prescribes [Mn]/([Si]+[Al]) from the viewpoint of the electrical conductivity and adhesion of the oxide film. In the present invention, the method of production is not particularly limited.

The ferritic stainless steel sheet of the present invention covers mainly cold rolled annealed sheets obtained by annealing hot rolled steel strips or omitting annealing and performing descaling, then cold rolling and then final annealing and descaling. In some cases, it may also be hot rolled annealed sheet not cold rolled. Furthermore, welded pipes for gas pipe use produced from steel plate are also included. Pipes are not limited to welded pipes and may also be seamless pipes produced by hot working. The above-mentioned final annealing of the steel is preferably performed at 800 to 1100°C. If less than 800°C, sometimes the softening and recrystallization of the steel become insufficient and the predetermined material properties cannot be obtained. On the other hand if over 1100° C, the grains become coarse and impair the toughness and ductility of the steel.

Further, for durability envisioning long term use, it is effective to perform preliminary oxidation before using the above ferritic stainless steel sheet for an SOFC separator and to form a dense oxide film in which Cr and Mn are concentrated at the initial stage of operation of the system to thereby uniformly form a pre-oxidized film at the steel sheet surface. By forming a dense oxide film at the surface in advance before operation of the SOFC system, it is possible to raise the uniformity and barrier property of the oxide film formed compared with the state of the metal surface and further improve the electrical conductivity and oxidation resistance of long term use. The preliminary oxidation conditions are made 1 min to 24 hours at 500 to 1000°C. The preliminary oxidation is performed in the air, inert gas, or air or inert gas containing water vapor. Here, the pre-oxidized film at which Cr and Mn concentrate at the steel sheet surface means an oxide film mainly comprised of $Cr_2O_3$ and including $MnCr_2O_4$: 10% or more. Note that, in $M_3O_4$ type oxides, oxides other than $MnCr_2O_4$ are present in only small amounts in the pre-oxidized film, so there is no need to consider these oxides other than $MnCr_2O_4$. The pre-oxidized films can be evaluated by X-ray diffraction of the surface. Specifically, among the diffraction peaks of $Cr_2O_3$ and $MnCr_2O_4$ observed by X-ray diffraction, if the integrated intensities of the diffraction peaks showing the maximum peak intensities are respectively designated as $I_{Cr203}$ and $I_{Mncr204}$, while a pre-oxidized film with an $I_{MnCr204}/(I_{Cr203}+I_{MnCr204})$ showing the ratio of integrated intensities of 0.10 or more is defined as a pre-oxidized film at which Cr and Mn are concentrated. Note that, the upper limit of the ratio of content of $MnCr_2O_4$ in the pre-oxidized film is preferably less than 50%. Further, the more preferable range of the ratio of content of $MnCr_2O_4$ is 15 to 40%.

[Examples]

Below, examples of the present invention will be explained.:

Ferritic stainless steels of the components shown in Table 1 were smelted and hot rolled to obtain thickness 4.0 to 5.0 mm hot rolled sheets. These were annealed and pickled at 900 to 1050°C. Next, these were repeatedly treated by process annealing and cold rolling to obtain 0.4 mm thick cold rolled sheets. These were annealed and pickled at 900 to 1000°C and used for test materials. Steel No. 11 has elements in the prescribed ranges of the present invention and satisfy the range of [Mn]/([Si]+[Al]) prescribed in the present invention. Steel Nos. 1 to 10 and 12 to 20 visualize the present application. As opposed to this, Steel Nos. 21 to 25 have elements outside the prescribed range of the present application but satisfy the range of [Mn]/([Si]+[Al]) prescribed in the present invention. Steel Nos. 26 and 27 had elements in the ranges of the present application but have [Mn]/([Si]+[Al]) outside the prescribed range of the present invention. Steel Nos. 28 to 30 have both the elements and [Mn]/([Si]+[Al]) outside the ranges prescribed in the present application. Further, Steel No. 30 is the conventionally known REM-containing ferritic stainless steel. The targeted electrical conductivity and adhesion of the oxide film of the present invention were judged based on Steel No. 30 as the standard.

The electrical conductivity and adhesion of the oxide film were evaluated by performing an oxidation test by the following guidelines envisioning long term use. In the oxidation test, accelerated test conditions were studied for simulating in a laboratory the amount of formation of oxides formed by operation for 45,000 hours (five years) at 750°C envisioning the standard operating temperature of an SOFC. The speed of growth of the oxide film can, for example, be found by the procedure in "Heat Treatment; 33, (1993), 251". The increase in oxidation after 45,000 hours at 750°C was predicted to be about 1.0 $mg/cm^2$ in the case of $Cr_2O_3$ oxide film. As the accelerating conditions (temperature and time) enabling an increase in oxidation corresponding to this to be simulated in a relatively short time, 900°C and 400 hr were selected. The dimensions of the test piece were made the sheet thickness $\times$ 25 mm $\times$ 20 mm. The front surface and end faces were wet polished by emery paper #600. After the acceleration test, the electrical conductivity and adhesion of the oxide film were evaluated.

The electrical conductivity of the oxide film was measured by the four-terminal method by baking a 25 mm$\times$20 mm Pt mesh to the surface of a sample at 900°C for 30 minutes. Specifically, the sample was inserted into a muffle furnace, the temperature was raised to 750°C, the voltage drop ($\Delta V$) was measured at the time of carrying current (I), the contact resistance (R=$\Delta V$/I) was found, the contact resistivity ($\rho$=R$\times$S, S: current carrying surface area) was calculated, and this was used as an indicator for evaluation of the electrical conductivity. For the Pt paste, TR-7905 made by Tanaka Precious Metals was used, while for the Pt mesh, $\phi$0.076 mm made by Tanaka Precious Metals was used. The measuring device used was a TR6143 made by Advantest (DC power source).

The adhesion of the oxide film was evaluated by measuring the peeling rate at the oxide film surface. Specifically, it was evaluated by the following procedure. After the oxidation test, photos of the appearance of the front and back sides of the test piece were enlarged to about 2X the actual dimensions. Then, the points showing marks of dispersal of oxides from the surface are counted. These points covered were ones of 0.5 mm or more when converted to actual size and a size able to be sufficiently discerned by the eye. The peeling rate (points/$cm^2$) was calculated by dividing the points counted from two samples and four surfaces by the surface area (20 $cm^2$). The criteria for judgment of good adhesion with no peeling of the oxide film was no more than one spot-like mark per surface. That is, peeling rate $\leq$0.2 (4 points/20 $cm^2$).

As a basic property of a steel sheet for separator use, the heat expansion coefficient at 750°C was measured. The sample dimensions were 5 mmW$\times$15 mmL, the atmosphere at the time of elevation of temperature was Ar, and the heat expansion coefficient was calculated starting from 25°C. The measuring device used was a TMA4000 made by Bruker AXS.

Table 1

| | Steel no. | Components (mass* | | | | | | | | | | [Mn] ([Si]+ [Al]) | Components (mass*) | Contact res. Peeling rate Heat ex. | | |
|---|---|---|---|---|---|---|---|---|---|---|---|---|---|---|---|---|
| | | C | Si | Mn | P | S | Cr | | Al | N | Ti | | Others | $\Omega \cdot m^2$ | Pt/cm | 1/°C |
| | 1 | 0.006 | 0.09 | 0.48 | 0.021 | 0.0004 | 22.3 | 1.1 | 0.055 | 0.018 | 0.25 | 3.3 | | 4.8E-04 | 0.05 | 1.13E-05 (Ref.) |
| | 2 | 0.005 | 0.06 | 0.79 | 0.022 | 0.0005 | 22.4 | 0.9 | 0.048 | 0.009 | 0.15 | 7.3 | | 5.5E-04 | 0.1 | 1.15E-05 (Ref.) |
| | 3 | 0.007 | 0.12 | 0.35 | 0.023 | 0.0003 | 22.2 | 1.2 | 0.015 | 0.009 | 0.28 | 2.6 | | 5.5E-04 | 0.1 | 1.12E-05 (Ref.) |
| | 4 | 0.009 | 0.03 | 0.45 | 0.028 | 0.0005 | 22.5 | 1.2 | 0.080 | 0.008 | 0.29 | 4.1 | | 2.5E-04 | 0.05 | 1.12E-05 (Ref.) |
| | 5 | 0.002 | 0.08 | 0.31 | 0.023 | 0.0003 | 21.8 | 0.9 | 0.028 | 0.005 | 0.08 | 2.9 | | 6.0E-04 | 0.1 | 1.13E-05 (Ref.) |
| | 6 | 0.019 | 0.07 | 0.55 | 0.024 | 0.0004 | 23.1 | 1.3 | 0.035 | 0.006 | 0.27 | 5.2 | | 6.0E-05 | 0 | 1.11E-05 (Ref.) |
| | 7 | 0.006 | 0.11 | 0.48 | 0.028 | 0.0005 | 24.8 | 0.5 | 0.042 | 0.008 | 0.25 | 3.2 | | 3.0E-04 | 0.1 | 1.15E-05 (Ref.) |
| | 8 | 0.007 | 0.09 | 0.52 | 0.027 | 0.0005 | 20.2 | 1.8 | 0.057 | 0.011 | 0.35 | 3.5 | | 2.5E-04 | 0.05 | 1.14E-05 (Ref.) |

(continued)

| Steel no. | | Components (mass*) | | | | | | | | | | [Mn]/([Si]+[Al]) | Components (mass*) Others | Contact res. Peeling rate Heat ex. | | |
|---|---|---|---|---|---|---|---|---|---|---|---|---|---|---|---|---|
| | | C | Si | Mn | P | S | Cr | | Al | N | Ti | | | Ω·m² | Pt/cm | 1/°C |
| Inv. ex. | 9 | 0.009 | 0.07 | 0.62 | 0.025 | 0.0003 | 20.8 | 1.5 | 0.058 | 0.002 | 0.45 | 4.8 | | 7.0E-05 | 0 | 1.13E-05 (Ref.) |
| | 10 | 0.009 | 0.11 | 0.53 | 0.018 | 0.0006 | 20.8 | 1.1 | 0.052 | 0.011 | 0.22 | 3.3 | Nb : 0.07 | 3.5E-04 | 0.05 | 1.14E-05 (Ref.) |
| | 11 | 0.008 | 0.11 | 0.52 | 0.018 | 0.0006 | 21.3 | 0.9 | 0.053 | 0.012 | 0.18 | 3.2 | Nb : 0.15, V:0. 05, Ga:0.001 | 3.5E-04 | 0.1 | 1.15E-05 |
| | 12 | 0.007 | 0.09 | 0.48 | 0.019 | 0.0006 | 21.8 | 1.1 | 0.038 | 0.011 | 0.19 | 3.8 | Ni:0.3 | 5.5E-04 | 0.05 | 1.14E-05 (Ref.) |
| | 13 | 0.006 | 0.11 | 0.49 | 0.018 | 0.0006 | 22.3 | 1.1 | 0.061 | 0.009 | 0.23 | 2.9 | V:0.05. Ni : 0.2, B: 0.001 | 5.8E-04 | 0.1 | 1.13E-05 (Ref.) |
| | 14 | 0.009 | 0.11 | 0.61 | 0.021 | 0.0006 | 21.8 | 1.1 | 0.048 | 0.007 | 0.18 | 3.9 | Mg:0.0007, Ca : 0.0008 | 4.5E-04 | 0 | 1.15E-05 (Ref.) |
| | 15 | 0.006 | 0.09 | 0.62 | 0.018 | 0.00061 | 20.6 | 1.2 | 0.052 | 0.011 | 0.22 | 4.4 | Zr : 0.01 | 1.8E-04 | 0 | 1.16E-05 |
| | 16 | 0.008 | 0.06 | 0.65 | 0.026 | 0.0003 | 22.5 | 1.5 | 0.035 | 0.008 | 0.25 | 6.8 | Nb:0. 12, La:0.02, REM:0.01 | 1.7E-04 | 0.1 | 1.12E-05 (Ref.) |
| | 17 | 0.005 | 0.09 | 0.52 | 0.021 | 0.0004 | 22.1 | 1.2 | 0.055 | 0.011 | 0.27 | 3.6 | Cu : 0.2 | 4.5E-04 | 0.05 | 1.14E-05 (Ref.) |
| | 18 | 0.004 | 0.09 | 0.45 | 0.021 | 0.0004 | 22.4 | 1.3 | 0.055 | 0.011 | 0.28 | 3.1 | Cu : 0.1, Sn : 0.05, Zr:0.01 | 4.3E-04 | 0 | 1.11E-05 (Ref.) |

(continued)

| | Steel no. | C | Si | Mn | P | S | Cr | | Al | N | Ti | [Mn]/([Si]+[Al]) | Others | Contact res. Ω·m² | Peeling rate Heat ex. Pt/cm | 1/°C |
|---|---|---|---|---|---|---|---|---|---|---|---|---|---|---|---|---|
| | 19 | 0.016 | 0.11 | 0.51 | 0.025 | 0.0005 | 22.6 | 1.1 | 0.052 | 0.011 | 0.31 | 3.1 | Co : 0.1, W : 0.3, Sb : 0.01 | 3.5E-04 | 0.05 | 1.11E-05 (Ref.) |
| | 20 | 0.005 | 0.06 | 0.79 | 0.022 | 0.0005 | 22.4 | 0.9 | 0.048 | 0.009 | 0.15 | 7.3 | Pre. oxid. a00°C, 12h of Steel No. 2 | 4.2E-04 | 0 | 1.15E-05 (Ref.) |
| | 21 | 0.008 | 0.18 | 0.54 | 0.022 | 0.0005 | 22.1 | 0.7 | 0.025 | 0.013 | 0.28 | 2.6 | | 2.5E-03 | 0.2 | 1.16E-05 |
| | 22 | 0.011 | 0.11 | 1.10 | 0.028 | 0.0003 | 20.8 | 1.3 | 0.065 | 0.014 | 0.29 | 6.3 | | 1.0E-03 | 0.3 | 1.16E-05 |
| | 23 | 0.006 | 0.06 | 0.70 | 0.027 | 0.0003 | 19.5 | 0.6 | 0.065 | 0.008 | 0.31 | 5.6 | Nb : 0.15 | 2.0E-03 | 0.1 | 1.21E-05 |
| Comp. ex. | 24 | 0.007 | 0.08 | 0.51 | 0.025 | 0.0005 | 20.5 | 9 | 0.110 | 0.012 | 0.29 | 2.7 | | 1.5E-03 | 0.3 | 1.15E-05 |
| | 25 | 0.008 | 0.06 | 0.35 | 0.027 | 0.0003 | 20.2 | 0.4 | 0.035 | 0.008 | 0.28 | 3.7 | | 1.0E-03 | 0.1 | 1.22E-05 |
| | 26 | 0.004 | 0.07 | 0.86 | 0.027 | 0.0003 | 22.5 | 1.1 | 0.035 | 0.013 | 0.27 | 8.2 | | 3.5E-03 | 0.4 | 1.15E-05 |
| | 27 | 0.003 | 0.09 | 0.35 | 0.022 | 0.0003 | 22.1 | 0.7 | 0.065 | 0.014 | 0.31 | 2.3 | | 1.5E-03 | 0.3 | 1.17E-05 |
| | 28 | 0.021 | 0.21 | 0.62 | 0.023 | 0.0004 | 21.9 | 1.1 | 0.070 | 0.022 | 0.28 | 2.2 | | 6.5E-03 | 0.3 | 1.15E-05 |
| | 29 | 0.023 | 0.16 | 0.75 | 0.027 | 0.0003 | 21.1 | 1.2 | 0.160 | 0.012 | 0.27 | 2.3 | | 8.0E-03 | 0.2 | 1.15E-05 |
| Co.ex REM | 30 | 0.022 | 0.27 | 0.30 | 0.022 | 0.0005 | 22.5 | - | 0.170 | 0.006 | 0.15 | 0.7 | REM : 0.04 | 6.0E-04 | 0.1 | 1.17E-05 |

Underlines mean outside present invention. In the table, "aE-0b" means a x 10-b. (Ref.) means (Reference)

The obtained results are shown in Table 1. Steel No. 11 satisfies both the targeted electrical conductivity and adhesion of the oxide film of the present invention and achieve the basic property of low heat expansion. Steels Nos. 1 to 10 and 12 to 20 visualize the present application. These steel sheets realized properties equal to or better than the conventionally known REM-containing ferritic stainless steel sheets. From this, it is understood that if satisfying the elements and the range of [Mn]/([Si]+[Al]) prescribed in the present invention, it is possible to impart electrical conductivity at a high temperature without impairing the excellent oxidation resistance of the $Cr_2O_3$oxide film. Steel No. 20 uses the same components as Steel No. 2 to form a pre-oxidized film by preliminary oxidation in the air at 800°C for 12h and improves the electrical conductivity and adhesion of the oxide film. From this, by performing the preliminary oxidation prescribed in the present invention, it is possible to raise the electrical conductivity and adhesion of the oxide film in steels of the same components. The pre-oxidized film of No. 20, according to X-ray diffraction of the surface, was mainly comprised of $Cr_2O_3$ and included $MnCr_2O_4$: 20%.

Steel Nos. 21, 22, 24, and 26 to 29 fail to attain one or both of the targeted electrical conductivity and adhesion of the oxide film of the present invention. From this, if either the elements or [Mn]/([Si]+[Al]) prescribed in the present application is outside the: above range, it is difficult to obtain both electrical conductivity and adhesion of the oxide film.

· Steel Nos. 23, 25 have electrical conductivities and adhesions of the oxide films within the targeted ranges, the basic property of the low heat expansion is not reached. From this, to obtain the basic property, the prescribed ranges of Cr and Mo have to be added.

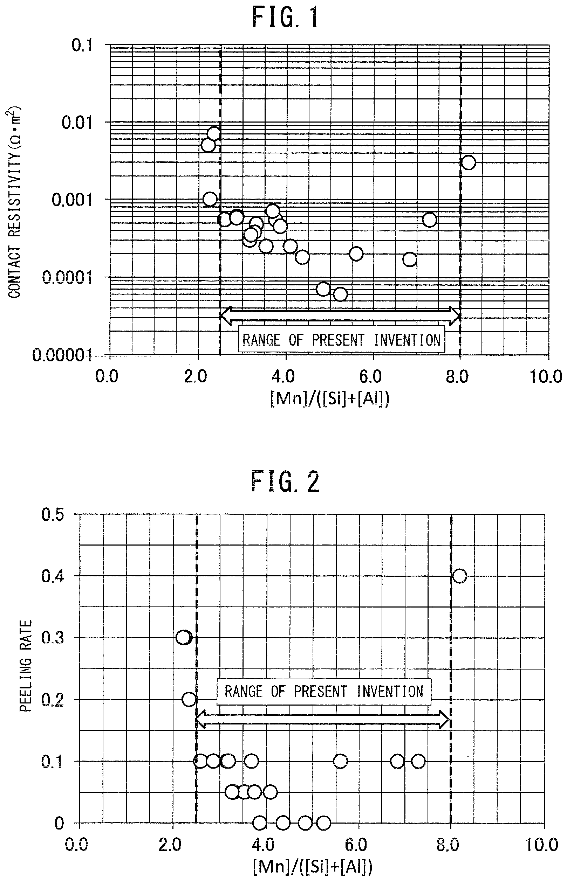

The relationships of [Mn]/([Si]+[Al]) with the contact resistivity and peeling rate at 750°C are shown in FIG. 1 and FIG. 2 for steel sheets satisfying the ranges of elements prescribed in the present invention. From this, it will be understood that to obtain the targeted electrical conductivity (contact resistivity) and adhesion of the oxide film of the present invention without impairing the excellent adhesion of the $Cr_2O_3$ oxide film, it is important to have the ranges of elements prescribed in the present invention and control [Mn]/([Si]+[Al]) to over 2.5 to less than 8.0 in range. It will be understood that the preferred range for obtaining both the properties of electrical conductivity and adhesion of the oxide film is a range of [Mn]/([Si]+[Al]) of 2.6 to 7.3.

[Industrial Applicability]

According to the present invention, by prescribing the components of the different elements and the range of [Mn]/([Si]+[Al]), it is possible to provide ferritic stainless steel sheet equipped with both excellent oxide film electrical conductivity and adhesion in long term use for SOFC use without relying on the addition of expensive rare earth elements. The ferritic stainless steel of the present invention can be industrially produced without relying on a special method of production.

**Claims**

1. A ferritic stainless steel sheet excellent in electrical conductivity and adhesion of an oxide film comprised of steel containing, by mass%, C: 0.001 to 0.02%, Si: 0.01 to 0.15%, Mn: 0.3 to 1%, P: 0.01 to 0.04%, S: 0.0002 to 0.003%, Cr: 20 to 25%, Mo: 0.5 to 2%, Al: 0.01 to 0.1%, N: 0.001 to 0.02%, Ti: 0.001 to 0.5%, and Ga: 0.0002 to 0.005% or less, having a balance of Fe and unavoidable impurities, and satisfying the formula (1)

$$2.5 < [Mn]/([Si]+[Al]) < 8.0 \quad \cdots (1)$$

wherein [Mn], [Si], and [Al] mean contents (mass%) of the elements, respectively,
wherein the steel further optionally contains, by mass%, one or more of Nb: 0.5% or less, V: 0.5% or less, Ni: 0.8% or less, Cu: 1% or less, Sn: 1% or less, B: 0.005% or less, Ca: 0.005% or less, W: 1% or less, Co: 1% or less, and Sb: 0.5% or less, and/or
wherein the steel further optionally contains, by mass%, one or more of Zr: 0.1% or less, La: 0.1% or less, Y: 0.1% or less, and REM: 0.1% or less.

2. The ferritic stainless steel sheet excellent in electrical conductivity and adhesion of an oxide film according to claim 1, wherein a pre-oxidized film in which Cr and Mn are concentrated is formed on a surface of the steel sheet, wherein the pre-oxidized film means an oxide film mainly comprised of $Cr_2O_3$ and including $MnCr_2O_4$ : 10% or more.

3. A method of producing the ferritic stainless steel sheet excellent in electrical conductivity and adhesion of an oxide film according to claim 1 or 2, comprising treating the steel by preliminary oxidation in a temperature range of 500 to 1000°C for 1 minute or more and 24 hours or less in the air, inert gas, or air or inert gas containing water vapor.

**Patentansprüche**

1. Ein ferritisches Edelstahlblech mit hervorragender elektrischer Leitfähigkeit und Haftung eines Oxidfilms, umfassend Stahl, enthaltend, in Massen-%, C: 0,001 bis 0,02%, Si: 0,01 bis 0,15%, Mn: 0,3 bis 1%, P: 0,01 bis 0,04%, S: 0,0002 bis 0,003%, Cr: 20 bis 25%, Mo: 0,5 bis 2%, Al: 0,01 bis 0,1%, N: 0,001 bis 0,02%, Ti: 0,001 bis 0,5%, und Ga: 0,0002 bis 0,005% oder weniger, mit einem Rest an Fe und unvermeidbaren Verunreinigungen, und wobei dieser die Formel (1) erfüllt

$$2,5 < [Mn]/([Si]+[Al]) < 8,0 \cdots (1)$$

wobei [Mn], [Si] und [Al] Gehalte (Massen-%) der jeweiligen Elemente bedeuten,
wobei der Stahl ferner gegebenenfalls, in Massen-%, eines oder mehrere aus Nb: 0,5% oder weniger, V: 0,5% oder weniger, Ni: 0,8% oder weniger, Cu: 1% oder weniger, Sn: 1% oder weniger, B: 0,005% oder weniger, Ca: 0,005% oder weniger, W: 1% oder weniger, Co: 1% oder weniger, und Sb: 0,5% oder weniger enthält, und/oder
wobei der Stahl ferner gegebenenfalls, in Massen-%, eines oder mehrere aus Zr: 0,1% oder weniger, La: 0,1% oder weniger, Y: 0,1% oder weniger und REM: 0,1% oder weniger enthält.

2. Das ferritische Edelstahlblech mit hervorragender elektrischer Leitfähigkeit und Haftung eines Oxidfilms nach Anspruch 1, wobei ein voroxidierter Film, in dem Cr und Mn konzentriert sind, auf einer Oberfläche des Stahlblechs gebildet ist, wobei der voroxidierte Film ein Oxidfilm, der hauptsächlich $Cr_2O_3$ umfasst und $MnCr_2O_4$: 10% oder mehr enthält, bedeutet.

3. Ein Verfahren zur Herstellung des ferritischen Edelstahlblechs mit hervorragender elektrischer Leitfähigkeit und Haftung eines Oxidfilms nach Anspruch 1 oder 2, umfassend Behandeln des Stahls durch vorausgehende Oxidation in einem Temperaturbereich von 500 bis 1000°C für 1 Minute oder mehr und 24 Stunden oder weniger in Luft, Inertgas oder Wasserdampf enthaltend Luft oder Inertgas.

**Revendications**

1. Tôle d'acier inoxydable ferritique excellente concernant la conductivité électrique et l'adhérence d'un film d'oxyde constituée d'acier contenant, en % en masse, C : 0,001 à 0,02 %, Si : 0,01 à 0,15 %, Mn : 0,3 à 1 %, P : 0,01 à 0,04 %, S : 0,0002 à 0,003 %, Cr : 20 à 25 %, Mo : 0,5 à 2 %, Al : 0,01 à 0,1 %, N : 0,001 à 0,02 %, Ti : 0,001 à 0,5 % et Ga : 0,0002 à 0,005 % ou moins, ayant un complément de Fe et d'impuretés inévitables, et satisfaisant la formule (1)

$$2,5 < [Mn]/([Si] + [Al]) < 8,0 \cdots (1)$$

où [Mn], [Si] et [Al] signifient les teneurs (% en masse) des éléments, respectivement,
où l'acier contient en outre éventuellement, en % en masse, un ou plusieurs de Nb : 0,5 % ou moins, V : 0,5 % ou moins, Ni : 0,8 % ou moins, Cu : 1 % ou moins, Sn : 1 % ou moins, B : 0,005 % ou moins, Ca : 0,005 % ou moins, W : 1 % ou moins, Co : 1 % ou moins et Sb : 0,5 % ou moins, et/ou
où l'acier contient en outre éventuellement, en % en masse, un ou plusieurs de Zr : 0,1 % ou moins, La : 0,1 % ou moins, Y : 0,1 % ou moins et MTR : 0,1 % ou moins.

2. Tôle d'acier inoxydable ferritique excellente concernant la conductivité électrique et l'adhérence d'un film d'oxyde selon la revendication 1, où un film pré-oxydé dans lequel Cr et Mn sont concentrés est formé sur une surface de la tôle d'acier, où le film pré-oxydé signifie un film d'oxyde constitué principalement de $Cr_2O_3$ et incluant $MnCr_2O_4$ : 10 % ou plus.

3. Procédé de production de la tôle d'acier inoxydable ferritique excellente concernant la conductivité électrique et l'adhérence d'un film d'oxyde selon la revendication 1 ou 2, comprenant le traitement de l'acier par oxydation préliminaire dans une plage de température de 500 à 1000°C pendant 1 minute ou plus et 24 heures ou moins dans l'air, un gaz inerte ou l'air ou un gaz inerte contenant de la vapeur d'eau.

# FIG. 1

# FIG. 2

**EP 3 095 888 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1298228 A2
- JP 2003173795 A
- JP 2005320625 A
- JP 2006057153 A
- JP 2006009056 A
- JP 2012067391 A